(19) Europäisches Patentamt
European Patent Office
Office européen des brevets

(11) **EP 0 557 242 B1**

(12) **EUROPÄISCHE PATENTSCHRIFT**

(45) Veröffentlichungstag und Bekanntmachung des Hinweises auf die Patenterteilung:
**17.04.1996   Patentblatt 1996/16**

(51) Int Cl.$^6$: **D01G 15/36**, H02P 1/32, H02P 7/48

(21) Anmeldenummer: **93810044.3**

(22) Anmeldetag: **22.01.1993**

(54) **Krempel- und Kardenantrieb**

Drive system for a woollen card and a card

Entraînement pour une carde dite laine et pour une carde

(84) Benannte Vertragsstaaten:
**CH DE GB IT LI**

(30) Priorität: **18.02.1992  CH 481/92**

(43) Veröffentlichungstag der Anmeldung:
**25.08.1993   Patentblatt 1993/34**

(73) Patentinhaber: **MASCHINENFABRIK RIETER AG**
**CH-8406 Winterthur (CH)**

(72) Erfinder: **Jäger, Wolfgang**
**W-7320 Göppingen (DE)**

(56) Entgegenhaltungen:
EP-A- 0 139 869          DE-A- 1 510 481
DE-A- 2 363 409          DE-A- 4 106 331
DE-B- 1 079 168          GB-A- 1 092 364

**Beschreibung**

Die Erfindung betrifft ein Verfahren zum Verändern der Drehzahl eines Karden- oder Krempeltambours und einem Antrieb dazu.

Ein Karden- oder Krempeltambour weist eine sehr hohe Masse auf, bspw. im Bereich von 1000 kg (ca. 10 000 N), bei einem äusseren Durchmesser von ca. 1,3 m und dreht mit einer Betriebsdrehzahl zwischen 300 und 600 U/min.

Wird, wie bisher, eine solche Masse mit einem gewöhnlichen Elektromotor angetrieben, entstehen hohe Anlaufströme mit hoher thermischer Belastung, so dass in der Regel der Antriebsmotor im Vergleich zur Antriebsleistung in der Betriebsdrehzahl aufgrund der erforderlichen Beschleunigung einer solchen Masse überdimensioniert werden muss.

Zur Bremsung einer solchen Masse wurde bisher eine an sich bekannte Trommel- oder Scheibenbremse verwendet.

Eine Verbesserung zeigt und beschreibt die gattungsgemässe ostdeutsche Patentschrift Nr. 224626, indem darin für den Anlauf oder für den Bremslauf Regelkreis-Wechselrichter in die Stromzuführung des Antriebsmotores des Trommelantriebes einschaltbar sind, welche nach dem Hochlauf- oder Bremslaufvorgang mittels einer Umschalteinheit abschaltbar oder auf andere Deckelkarden umschaltbar sind. Die Umschalteinheit schaltet für den Betrieb auf Frequenzumrichter um.

Die erstgenannte Lösung mit überdimensionierten Motoren für den Anlauf und mit Bremsvorrichtungen für den Bremsvorgang sowie auch die vorgenannte Schaltmöglichkeit der DD 224626 sind relativ teure und umständliche Lösungen.

Es stellte sich deshalb die Aufgabe, in einer einfachen und billigen Weise den Karden- oder Krempeltambour auf die Betriebsdrehzahl und wieder zurück in den Stillstand zu bringen.

Die erfindungsgemässe Lösung dieser Aufgabe ist in den Kennzeichen der unabhängigen Ansprüche aufgeführt. Die weiteren Ansprüche umfassen weitere vorteilhafte Ausführungsformen.

Die Erfindung wird anhand eines Ausführungsbeispieles näher erläutert.

Es zeigt:

Fig. 1    schematisch eine Karde oder Krempel mit Tambour-Antrieb,

Fig. 2    ein Schaltschema für das erfindungsgemässe Antreiben eines Karden- oder Krempeltambours,

Fig. 3    eine Dreieck-Schaltung für die erfindungsgemässe erste Beschleunigungs- und erste Bremsstufe,

Fig. 4    eine Sternschaltung für die erfindungsgemässe zweite Beschleunigungsstufe,

Fig. 5    eine Sternschaltung für die erfindungsgemässe zweite Bremsstufe.

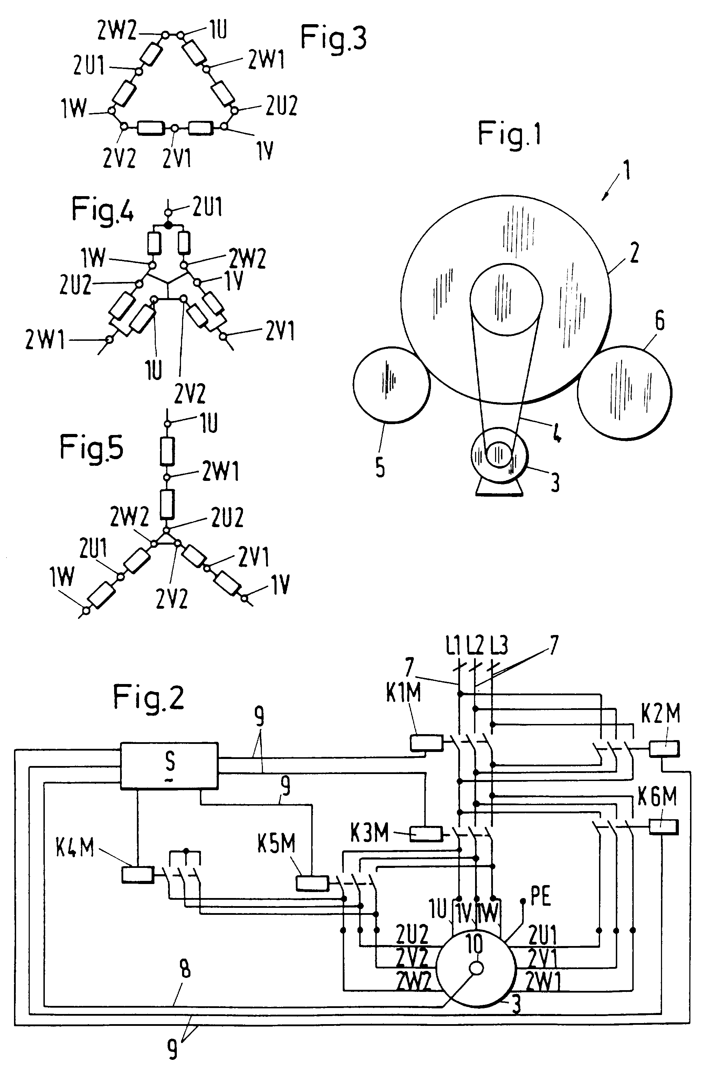

Fig. 1 zeigt eine Karde oder Krempel 1 mit einem Tambour 2, einem Asynchron-Drehstrommotor 3, einem Übertrieb 4 für die Übertragung der Kraft vom Motor 3 auf den Tambour, sowie eine Auflösewalze 5 und eine Abnehmerwalze 6.

Fig. 2 zeigt schematisch den Asynchron-Drehstrommotor 3, welcher mittels der anschliessend beschriebenen Schaltfolge aus dem Stillstand in die End- bzw. Betriebsdrehzahl beschleunigt und aus dieser Betriebsdrehzahl wieder auf Null verzögert wird.

Der Einfachheit halber sind die Stromführungen 7 im Schaltschema nur an einer Stelle mit Zahlen gekennzeichnet, und das Verbindungssystem ist aus der Fig. 2 sowie den Fig. 3 bis 5 für einen Elektrofachmann klar ersichtlich.

Die Bezeichnung 1U, 1V, 1W sowie 2U1, 2V1 und 2W1 wie auch die Bezeichnungen 2U2, 2V2 und 2W2 kennzeichnen die Wicklungen des Sterndreieck-Drehstrom-Asynchron-Motores 3.

Bei den mit K1M bis und mit K6M bezeichneten Elemente handelt es sich um Schaltelemente, welche, wie aus der Figur 2 ersichtlich, die Stromführungen 7 mit Hilfe einer Steuerung S schliessen oder unterbrechen.

Der Betrieb geht nun folgendermassen:

Für die erste Beschleunigungsstufe werden die Schalter K1M, K3M und K5M geschlossen, was in diesem Beispiel einer 4-poligen Dreieckschaltung entspricht, in welcher bei einer Frequenz von 50 Hz der Motor auf ungefähr 1460 U/min beschleunigt wird. Diese Dreieckschaltung ist mit Fig. 3 dargestellt.

Für die zweite Beschleunigungsstufe wird gemäss Fig. 4 auf eine 2-polige Doppelsternschaltung umgeschaltet, so dass der Motor in dieser Beschleunigungsstufe die Betriebsdrehzahl von ungefähr 2940 U/min erreichen kann. In dieser zweiten Beschleunigungsstufe werden die in Fig. 2 gezeigten Schalter K1M, K6M, K4M und K5M geschlossen und der Schalter K3M wieder geöffnet.

In der ersten Bremsstufe werden entsprechend der ersten Beschleunigungsstufe wieder die Schalter K1M, K3M und K5M geschlossen und die Schalter K6M und K4 M wieder geöffnet, so dass aus der Doppel-Sternschaltung in die mit Fig. 3 gezeigte Dreieckschaltung zurückgeschaltet wird, wodurch der Motor auf die Zwischendrehzahl von ungefähr 1460 U/min gebremst wird.

Vorteilhafterweise wird als Variante die dabei erzeugte Energie abgegeben, wodurch der Motor als Generator arbeitet und dadurch vermieden wird, dass die Energie im Motor selbst vernichtet, d.h. in Wärme umgesetzt wird.

In der zweiten Bremsstufe werden die Schalter K2M, K3M und K4M geschlossen und die Schalter K1M und K5M wieder geöffnet, so dass eine Stern-Schaltung gemäss Fig. 5 entsteht und durch das Öffnen des Schalters K1M und Schliessen des Schalters K2M ein Gegenstrom entsteht, welcher den Motor mit einer in Gegendrehrichtung gerichteten Kraft bis zum Stillstand bremst.

Als Variante könnte der Schalter K2M und K5M statt K1M und K5M geschlossen werden, so dass in Dreieckschaltung die Bremsung durch Umschaltung der Drehrichtung erfolgt, was eine raschere Bremsung, jedoch auch eine höhere Belastung, des Motors 3 zur Folge hat als eine Bremsung in der Sternschaltung gemäss Fig. 5.

Ein Sensor 10 an der Welle des Motors 3 signalisiert die Drehzahl des Motors 3 an die Steuerung S, welche bei Erreichen der Drehzahl Null die Schaltung insofern ausschaltet, als dadurch alle Schalter K1M bis K6M ausgeschaltet werden. Bei der Steuerung S handelt es sich um eine an sich bekannte Rieter-Mikroprozessor-Steuerung; es könnte sich aber auch um eine Schützen-, Relais- oder speicherprogrammierbare Steuerung handeln.

Der Vorteil der Erfindung liegt im folgenden:

Die Schwierigkeit beim Beschleunigen eines Karden- oder Krempeltambours liegt im hohen Massen-Trägheitsmoment des Tambours, welches die zulässige thermische Auslegung eines Normmotors für die entsprechende Betriebsleistung um ein Mehrfaches, bspw. 10-faches, übersteigt.

Andererseits entsprechen die Anlaufverluste, d.h. die erzeugte Anlaufwärme der Asynchron-Motoren der kinetischen Energie der beschleunigten Massen, gemäss der Formel

W = kinetische Energie
J = Massenträgheitsmoment
$\omega$ = Winkelgeschwindigkeit

$$W = \tfrac{1}{2}\, J\, \omega^2 \; [Nm]$$

Durch die erfindungsgemässe Verwendung eines polumschaltbaren Motores können durch die erwähnten Drehzahlstufen, bspw. einer Zwischendrehzahl, welche der Hälfte der Enddrehzahl entspricht, die Anfahrverluste ebenfalls halbiert werden.

Das kann mit folgender Formel dargelegt werden:

1. Anfahrverluste $W_1$ bei einer Beschleunigung direkt, d.h. ohne Polumschaltbarkeit von Null auf die Enddrehzahl $n_{max}$:

$$W_1 = \frac{1}{2}\, J\, \omega_{max}^2$$

2. Anfahrverluste $W_2$ mit Polumschaltung:

$$\frac{2x\, n_{max}}{2}$$

$$W_2 = W_{\frac{n}{2}} + W_{\frac{n}{2}} = \frac{1}{2}\, J\, \omega_1^2 + \frac{1}{2}\, J\, \omega_2^2$$

$$= \frac{1}{2}\, J\, (\omega_1^2 + \omega_2^2)$$

$$= J\, (\frac{\omega_{max}}{2})^2$$

$$W = \frac{1}{4}\, J\, \omega_{max}^2$$

daraus folgt:

$$\boxed{W_2 = \frac{1}{2}\, W_1}$$

$P_V$ = Gesamtverlust ohne Polumschaltung

$P_{V_1}$ = 1. Teilverlust

$P_{V_2}$ = 2. Teilverlust

$$P_{V_1} + P_{V_2} = \tfrac{1}{2} P_V$$

In unserem vorerwähnten erfindungsgemässen Beispiel wurde ein polumschaltbarer Motor mit 4/2-Polen gewählt, welcher bei einer Netzfrequenz von 50 Hz, bei einem Anlauf in der 4-Pol-Wicklung eine effektive Zwischendrehzahl von ca. 1460 U/min und mit der 2-poligen Wicklung eine effektive Drehzahl von ca. 2960 U/min entwickelt.

Dabei sind beide Wicklungen für etwa die gleiche Leistung auszuführen.

Im weiteren sei noch erwähnt, dass die Verbindungsleitungen zwischen der Steuerung S und den Schaltern K1M bis K6M mit 9 und die Eingangsleitungen mit $L_1$, $L_2$ und $L_3$ gekennzeichnet sind.

Letztlich sei erwähnt, dass auch mehr als zwei Polstufen im Sinne der Erfindung möglich sind und die Erfindung nicht auf eine 2-polige Lösung eingeschränkt ist, sowie dass auch gleichzeitig der Briseur 5 zusammen mit dem Tambour 2 angetrieben (nicht gezeigt) werden kann.

**Patentansprüche**

1. Verfahren zum Verändern der Drehzahl eines rotierenden Karden- oder Krempeltambours (2), dadurch gekennzeichnet, dass die Drehzahlveränderung stufenweise, entsprechend der Polumschaltbarkeit eines polumschaltbaren Motors (3), bis zum Erreichen der Betriebsdrehzahl, bzw. bis zum Erreichen des Stillstandes des Tambours (2), geschieht.

2. Verfahren nach Anspruch 1, dadurch gekennzeichnet, dass der den Tambour (2) antreibende Motor (3) in einer primären Beschleunigungsstufe mittels einer Dreieckschaltung (Fig. 3) mit einer höheren Polzahl des Motors (3) beschleunigt wird als in einer zweiten Beschleunigungsstufe, und die Beschleunigung auf eine nächst höhere bzw. End-Drehzahl- resp. niedrigere Polstufe des Motors (3) mittels einer Doppelstern-Schaltung (Fig. 4) erfolgt.

3. Verfahren nach Anspruch 2, dadurch gekennzeichnet, dass der den Tambour (2) antreibende Motor (3) aus der End-Drehzahl in einer primären Verzögerungsstufe durch Umschalten aus der vorgenannten Doppelstern-Schaltung (Fig. 4) in die vorgenannte Dreieck-Schaltung (Fig. 3) in die nächst tiefere Drehzahlresp. höhere Polstufe und in einer sekundären Verzögerungsstufe bis zum Stillstand des Tambours (2) durch Umschalten aus der Dreieckschaltung (Fig. 3) der primären Verzögerungsstufe in eine Sternschaltung (Fig. 5) schaltet, in welcher der Motor (3) den Tambour (2) mit einer in Gegendrehrichtung gerichteten Kraft bis zum Stillstand bremst.

4. Verfahren nach Anspruch 3, dadurch gekennzeichnet, dass der Motor in der primären Verzögerungsstufe als Generator verwendet wird.

5. Verfahren nach Anspruch 3, dadurch gekennzeichnet, dass der Antrieb in Abhängigkeit der Drehzahl bei der Drehzahl Null abgeschaltet wird.

6. Antrieb eines Karden- oder Krempeltambours, dadurch gekennzeichnet, dass ein polumschaltbarer Asynchron-Drehstrom-Motor (2) für den Antrieb des Tambours vorgesehen ist.

**7.** Antrieb nach Anspruch 6,

dadurch gekennzeichnet, dass der Motor (2) mindestens zwei Polstufen aufweist und im weiteren der Antrieb eine Schaltung (Fig. 2) mit mindestens einer ersten und zweiten Beschleunigungsstufe umfasst, wobei bei Verwendung von zwei Stufen in der ersten Beschleunigungsstufe der Motor in der Polstufe für die tiefere Drehzahl mittels einer Dreieckschaltung (Fig. 3) bis zum Erreichen einer Zwischendrehzahl mittels entsprechenden Schaltern (K1M + K3M + K5M) geschaltet und in der zweiten Beschleunigungsstufe der Motor in der Polstufe für die höhere Drehzahl mittels entsprechenden Schaltern (K1M + K4M + K 5M + K6M) einer Doppel-Sternschaltung (Fig. 4) bis zum Erreichen der End- resp. Betriebsdrehzahl geschaltet wird.

**8.** Antrieb nach Anspruch 7,

dadurch gekennzeichnet, dass die Schaltung (Fig. 2) im weiteren mindestens eine erste und zweite Bremsstufe anfasst, wobei bei Verwendung von zwei Stufen in der ersten Bremsstufe aus der vorgenannten Doppel-Sternschaltung (Fig. 4) für die zweite Beschleunigungsstufe in die der ersten Beschleunigungsstufe entsprechenden Dreieckschaltung (Fig. 3) zurückgeschaltet wird, wodurch der Motor (3) aus der oberen in die tiefere bzw. in die Zwischendrehzahl gebremst wird, und in der zweiten Bremsstufe aus der vorgenannten Dreieckschaltung (Fig. 3) mittels entsprechenden Schaltern (K2M + K3M + K4M) in eine Sternschaltung (Fig. 5) umschaltet, mittels welcher der Motor (3) mit einer in Gegendrehrichtung gerichteten Kraft bis zur Drehzahl Null gebremst und bei Stillstand der Antrieb mittels eines der Steuerung (S) abgegebenen Signales (8) eines an der Motorwelle (nicht gekennzeichnet) vorgesehenen, die Drehzahl der Welle messenden Sensors (10) von der Steuerung (S) ausgeschaltet wird.

**9.** Antrieb nach Anspruch 8,
dadurch gekennzeichnet, dass in der ersten Bremsstufe der Motor als Generator wirkt, d.h. den erzeugten Strom abgibt und damit nicht im Motor in Wärme umsetzt.

**10.** Verfahren nach Anspruch 2,
dadurch gekennzeichnet, dass der den Tambour (2) antreibende Motor (3) aus der Enddrehzahl in einer primären Verzögerungsstufe durch Umschalten aus der vorgenannten Doppelstern-Schaltung (Fig. 4) in die vorgenannte Dreieckschaltung (Fig. 3) in die nächst tiefere Drehzahlresp. höhere Polstufe und in einer sekundären Verzögerungsstufe bis zum Stillstand des Tambours (2) durch Umschalten der Drehrichtung in die entgegengesetzte Richtung erfolgt.

**11.** Antrieb nach Anspruch 7,

dadurch gekennzeichnet, dass die Schaltung (Fig. 2) im weiteren mindestens eine erste und zweite Bremsstufe umfasst, wobei bei Verwendung von zwei Stufen in der ersten Bremsstufe aus der vorgenannten Doppel-Stern-Schaltung (Fig. 4) für die zweite Beschleunigungsstufe in die der ersten Beschleunigungsstufe entsprechende Dreieckschaltung (Fig. 3) zurückgeschaltet wird, wodurch der Motor (3) aus der oberen in die tiefere, bzw. in die Zwischendrehzahl, gebremst wird, und in der zweiten Bremsstufe in der Dreieckschaltung mittels entsprechenden Schaltern (K2M + K3M + K5M) die Drehrichtung in die umgekehrte Richtung umgeschaltet wird und dadurch der Motor bis zur Drehzahl Null gebremst, und bei Stillstand der Antrieb mittels eines der Steuerung (S) abgegebenen Signales (8) eines an der Motorwelle (nicht gekennzeichnet) vorgesehenen, die Drehzahl der welle messenden Sensors (10) von der Steuerung (S) aus geschaltet wird.

**Claims**

**1.** A method for changing the rotating speed of a rotating card cylinder (2), characterized in that the change in rotating speed occurs in stages according to the pole changeability of a pole-changeable motor (3) until the operating speed or the standstill of the cylinder (2) is reached.

**2.** A method as claimed in claim 1, characterized in that the motor (3) driving the cylinder (2) is accelerated in a primary accelerating stage by means of a triangle connection (Fig. 3) with a higher pole number of the motor (3) than in a second accelerating stage and that the acceleration to the next higher or final speed or next lower pole stage of the motor (3), respectively, is made by means of a duplex star connection (Fig. 4).

3. A method as claimed in claim 2, characterized in that the motor (3) driving the cylinder (2) switches in a primary braking stage from the final speed to the next lower speed stage or next higher pole stage by switching over from the aforesaid duplex star connection (Fig. 4) to the aforesaid triangle connection (Fig. 3) and in a secondary braking stage until the standstill of the cylinder (2) by switching over from the triangle connection (Fig. 3) of the primary braking stage into a star connection (Fig. 5) in which the motor (3) brakes the cylinder (2) until it comes to a standstill, with the braking being made with a force acting in a counterrotary direction.

4. A method as claimed in claim 3, characterized in that the motor is used in the primary braking stage as a generator.

5. A method as claimed in claim 3, characterized in that the drive is switched off depending on the rotating speed at zero rotating speed.

6. A drive of a card cylinder, characterized in that a pole-changeable three-phase asynchronous motor (2) is provided for driving the cylinder.

7. A drive as claimed in claim 6, characterized in that the motor (2) comprises at least two pole stages and that furthermore the drive comprises a circuit (Fig. 2) with at least a first and second accelerating stage, whereby when two stages are used the motor is switched in the first accelerating stage in the pole stage for the lower rotating speed by means of a triangle connection (Fig. 3) until an intermediate speed is reached by means of respective switches (K1M + K3M + K5M) and the motor is switched in the second accelerating stage in the pole stage for the higher rotating speed by means of respective switches (K1M + K4M + K5M + K6M) of a duplex star connection (Fig. 4) until the final or operating speed is reached.

8. A drive as claimed in claim 7, characterized in that the circuit (Fig. 2) further comprises at least a first and second braking stage, whereby when two stages are used in the first braking stage the motor is switched back from the aforesaid duplex star connection (Fig. 4) for the second accelerating stage to the triangle connection (Fig. 3) which corresponds to the first accelerating stage, thus braking the motor (3) from the higher to the lower or intermediate speed, and in the second braking stage the motor is switched back from the aforesaid triangle connection (Fig. 3) by means of respective switches (K2M + K3M + K4M) to a star connection (Fig. 5), by means of which the motor (3) is braked with a force acting in a counterrotary direction until zero rotating speed is reached and upon reaching said standstill the drive is switched off by means of a signal (8) sent to the control unit (S) and obtained from a sensor (10) provided on the motor shaft (not shown) for measuring the rotating speed of said shaft.

9. A drive as claimed in claim 8, characterized in that in the first braking stage the motor acts as generator, i.e. it supplies the generated power and does not transform it into heat.

10. A method as claimed in claim 2, characterized in that the motor (3) driving the cylinder (2) switches in a primary braking stage from the final speed to the next lower speed stage or next higher pole stage by switching over from the aforesaid duplex star connection (Fig. 4) to the aforesaid triangle connection (Fig. 3) and in a secondary braking stage until the standstill of the cylinder (2) by switching the direction of rotation into the opposite direction.

11. A drive as claimed in claim 7, characterized in that the circuit (Fig. 2) further comprises at least a first and second braking stage, whereby when two stages are used in the first braking stage the motor is switched back from the aforesaid duplex star connection (Fig. 4) for the second accelerating stage to the triangle connection (Fig. 3) which corresponds to the first accelerating stage, thus braking the motor (3) from the higher to the lower or intermediate speed, and in the second braking stage the direction of rotation is switched into the opposite direction in the triangle connection by means of respective switches (K2M + K3M + K5M), thus braking the motor until zero speed is reached and upon reaching said standstill the drive being switched off by means of a signal (8) sent to the control unit (S) and obtained from a sensor (10) provided on the motor shaft (not shown) for measuring the speed of said shaft.

**Revendications**

1. Procédé pour varier le nombre de tours d'un tambour en rotation (2) d'une carde ou d'une carde à laine,

   caractérisé par le fait que
   la variation du nombre de tours s'effectue par étages, en fonction de la possibilité de commutation de polarité d'un moteur (3) à nombre de pôles variable, jusqu'à l'obtention de la vitesse de régime, respectivement jusqu'à

EP 0 557 242 B1

l'obtention de l'arrêt du tambour (2).

2. Procédé selon revendication 1,

caractérisé par le fait que,
dans un premier étage d'accélération, le moteur (3) entraînant le tambour (2) est accéléré avec un plus grand nombre de pôles du moteur (3) que dans un deuxième étage d'accélération, à l'aide d'une connexion en triangle (figure 3), et l'accélération vers un étage de nombre de tours suivant plus élevé, respectivement vers un étage de nombre de tours final, respectivement sur un étage de polarité plus petit du moteur (3), s'effectue à l'aide d'un couplage en double étoile (figure 4).

3. Procédé selon revendication 2,

caractérisé par le fait que,
dans un premier étage de ralentissement, le moteur (3) entraînant le tambour (2) commute depuis le nombre de tours final dans l'étage de nombre de tours suivant plus bas, respectivement dans l'étage de polarité plus élevé, par commutation dudit couplage en double étoile (figure 4) dans ladite connexion en triangle (figure 3), et, dans un deuxième étage de ralentissement jusqu'à l'arrêt du tambour (2), par commutation de la connexion en triangle (figure 3) du premier étage de ralentissement, dans un couplage en étoile (figure 5) dans lequel le moteur (3) freine le tambour (2) jusqu'à l'arrêt, avec une force dirigée dans le sens de rotation contraire.

4. Procédé selon revendication 3,

caractérisé par le fait que,
dans le premier étage de ralentissement, le moteur est utilisé comme générateur.

5. Procédé selon revendication 3,

caractérisé par le fait que,
en fonction du nombre de tours, l'entraînement est déconnecté lorsque le nombre de tours est égal à zéro.

6. Entraînement d'un tambour de carde ou de carde à laine,

caractérisé par le fait
qu'un moteur asynchrone triphasé (2) à nombre de pôles variable est prévu pour l'entraînement du tambour.

7. Entraînement selon revendication 6,

caractérisé par le fait que
le moteur (2) possède au moins deux étages de polarité, et, en outre, l'entraînement comprend une connexion (figure 2) ayant au moins un premier et un deuxième étages d'accélération, et où, lors de l'utilisation de deux étages, dans le premier étage d'accélération, le moteur est commuté dans l'étage de polarité valable pour le nombre de tours plus bas, à l'aide d'une connexion en triangle (figure 3), jusqu'à l'obtention d'un nombre de tours intermédiaire, à l'aide d'interrupteurs correspondants (K1M + K3M + K5M), et, dans le deuxième étage d'accélération, le moteur est commuté dans l'étage de polarité valable pour le nombre de tours plus élevé, à l'aide d'interrupteurs correspondants (K1M + K4M + K5M + K6M) d'un couplage en double étoile (figure 4), jusqu'à l'obtention du nombre de tours final, respectivement de la vitesse de régime.

8. Entraînement selon revendication 7,

caractérise par le fait que
la connexion (figure 2) comprend, en outre, au moins un premier et un deuxième étages de freinage, et où, lors de l'utilisation de deux étages, dans le premier étage de freinage, on rétrograde depuis ledit couplage en double étoile (figure 4) valable pour le deuxième étage d'accélération, dans la connexion en triangle (figure 3) correspondant au premier étage d'accélération, ce par quoi le moteur (3) est freiné depuis le nombre de tours supérieur jusqu'au nombre de tours inférieur, respectivement jusqu'au nombre de tours intermédiaire, et, dans le deuxième étage de freinage, on commute depuis ladite connexion en triangle (figure 3), à l'aide d'interrupteurs correspondants (K2M + K3M + K4M), dans un couplage en étoile (figure 5), à l'aide duquel le moteur (3) est freiné jusqu'au nombre de tours égal à zéro, par une force dirigée dans le sens de rotation contraire, et, lors de l'arrêt, l'entraînement est déconnecté par la commande (S), à l'aide d'un signal (8) délivré à la commande (S) par un détecteur (10) mesurant le nombre de tours de l'arbre, et prévu sur l'arbre de moteur (non dessiné).

9.  Entraînement selon revendication 8,

    caractérisé par le fait que,
    dans le premier étage de freinage. le moteur agit comme générateur, c'est-à-dire qu'il délivre le courant produit et ne le transforme pas en chaleur dans le moteur.

10. Procédé selon revendication 2,

    caractérisé par le fait que
    dans un premier étage de ralentissement, le moteur (3) entraînant le tambour (2) commute depuis le nombre de tours final dans l'étage de nombre de tours suivant plus bas, respectivement dans l'étage de polarité plus élevé, par commutation dudit couplage en double étoile (figure 4) dans ladite connexion en triangle (figure 3), et, dans un deuxième étage de ralentissement jusqu'à l'arrêt du tambour (2), par commutation du sens de rotation dans le sens contraire.

11. Entraînement selon revendication 7,

    caractérisé par le fait que
    la connexion (figure 2) comprend, en outre, au moins un premier et un deuxième étages de freinage, et où, lors de l'utilisation de deux étages, dans le premier étage de freinage, on rétrograde depuis ledit couplage en double étoile (figure 4) valable pour le deuxième étage d'accélération, dans la connexion en triangle (figure 3) correspondant au premier étage d'accélération, ce par quoi le moteur (3) est freiné depuis le nombre de tours supérieur jusqu'au nombre de tours inférieur, respectivement jusqu'au nombre de tours intermédiaire, et, dans le deuxième étage de freinage, dans la connexion en triangle, le sens de rotation est inversé dans le sens inverse, à l'aide d'interrupteurs correspondants (K2M + K3M + K5M), et par ce fait, le moteur est freiné jusqu'au nombre de tours zéro, et, lors de l'arrêt, l'entraînement est déconnecté par la commande (S), à l'aide d'un signal (8) délivré à la commande (S) par un détecteur (10) mesurant le nombre de tours de l'arbre, et prévu sur l'arbre de moteur (non dessiné).

Fig.3

Fig.1

Fig.4

Fig.5

Fig.2